(19) Europäisches Patentamt
European Patent Office
Office européen des brevets

(11) EP 1 189 962 B1

(12) EUROPÄISCHE PATENTSCHRIFT

(45) Veröffentlichungstag und Bekanntmachung des Hinweises auf die Patenterteilung:
**12.11.2003 Patentblatt 2003/46**

(21) Anmeldenummer: **00927225.3**

(22) Anmeldetag: **22.05.2000**

(51) Int Cl.[7]: **C08G 18/38**, C08G 18/62, C08G 18/80, C09D 175/04, C09D 133/06, C08K 3/36

(86) Internationale Anmeldenummer:
**PCT/EP00/04617**

(87) Internationale Veröffentlichungsnummer:
**WO 00/071596 (30.11.2000 Gazette 2000/48)**

(54) **BESCHICHTUNGSSTOFF MIT EINER MISCHUNG AUS KIESELSÄUREN UND HARNSTOFF UND/ODER HARNSTOFFDERIVATEN**

COATING MATERIAL CONTAINING A MIXTURE OF SILICIC ACIDS AND UREA AND/OR UREA DERIVATIVES

SUBSTANCE DE REVETEMENT CONTENANT UN MELANGE D'ACIDES SILICIQUES ET D'UREE OU DE DERIVES D'UREE

(84) Benannte Vertragsstaaten:
**AT BE CH CY DE DK ES FI FR GB GR IE IT LI LU MC NL PT SE**

(30) Priorität: **25.05.1999 DE 19924172**

(43) Veröffentlichungstag der Anmeldung:
**27.03.2002 Patentblatt 2002/13**

(73) Patentinhaber: **BASF Coatings AG**
**48165 Münster (DE)**

(72) Erfinder:
- **BAUMGART, Hubert**
  **D-48163 Münster (DE)**
- **CONRING, Uwe**
  **D-48249 Dülmen (DE)**
- **COOK, Vince**
  **D-48165 Münster (DE)**
- **MAYENFELS, Peter**
  **D-48163 Münster (DE)**
- **SCHULZE-FINKENBRINK, Guido**
  **D-48163 Münster (DE)**

(74) Vertreter: **Fitzner, Uwe, Dr.**
**Lintorfer Strasse 10**
**40878 Ratingen (DE)**

(56) Entgegenhaltungen:
**DE-A- 19 709 465**
**US-A- 4 416 941**
**US-A- 4 528 319**

- **PATENT ABSTRACTS OF JAPAN vol. 013, no. 205 (C-595), 15. Mai 1989 (1989-05-15) & JP 01 024851 A (MITSUI TOATSU CHEM INC), 26. Januar 1989 (1989-01-26)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft einen Beschichtungsstoff, enthaltend ein Bindemittel und ein Vernetzungsmittel sowie ein Thixotropierungsmittel aus der Gruppe, bestehend aus "Kieselsäuren sowie Harnstoff und/oder Harnstoffderivaten", ein Verfahren zur Herstellung eines solchen Beschichtungsstoffs, eine Verwendung eines solchen Beschichtungsstoffs für die Herstellung von Klarlackierung und ein Verfahren zur Herstellung von Klarlackierungen im Rahmen der Herstellung farbund/oder effektgebender Mehrschichtlackierungen.

Beschichtungsstoffe mit Thixotropierungsmitteln sind bekannt. In den Literaturstellen EP-A-192 304, DE-A-23 59 923, DE-A-18 05 693, WO 94/22968 und DE-C-27 51 761 sind Beschichtungsstoffe beschrieben, welche als Thixotropierungsmittel Harnstoffderivate enthalten. In den Schriften US-A-4,528,319 und JP 01 024851 werden Harnstoffderivate in Verbindung mit Polyurethanen als Bindemittel eingesetzt. Gemäß der DE-A-199 17 228 werden zur Thixotropierung SCA-Mitteln, enthaltend halbkristalline, organische Verbindungen auf Harnstoffbasis, in Mattierungsmittel eingesetzt. Ferner werden harnstoffgruppenhaltige Thixotropierungsmittel in Verbindung mit Polyacrylatharzen in der DE-A-43 10 413 beschrieben. Andererseits sind beispielsweise in den Literaturstellen WO 97/12945 und "farbe + lack", 11/1992, Seiten 829 ff., Beschichtungsstoffe beschrieben, welche als Thixotropierungsmittel modifizierte, hydrophile oder hydrophobe Kieselsäuren enthalten. In dieser Literaturstelle sind auch Harnstoffderivate als Alternative beiläufig erwähnt. Aus der Literaturstelle US-A-4,169,930 sind Umsetzungsprodukte aus Kieselsäure und Aminen, beispielsweise Harnstoff zur Verwendung in Beschichtungsstoffen bekannt. Schließlich sind in der Literaturstelle DE-A-37 26 959 Beschichtungsstoffe bekannt, welche Harnstoff in gelöster Form enthalten. Aufgrund der Tatsache, daß der Harnstoff gelöst ist, dürfte dieser nicht die Funktion eines Thixotropierungsmittels erfüllen.

Mit dem Einsatz von Thixotropierungsmitteln in Beschichtungsstoffen soll unter anderem die Applikation von vergleichsweise dicken Lackschichten ermöglicht werden, ohne daß es zu störender "Läuferbildung" kommt. Insbesondere im Fall von nichtwäßrigen Lacken, die ein Thixotropierungsmittel auf Basis von Harnstoffderivaten enthalten, werden, jedenfalls bei hohen Feststoffgehalten, Lackoberflächen erhalten, die hinsichtlich ihres optischen Erscheinungsbildes (insbesondere Verlauf und Glanz) unbefriedigend sind und zudem aber auch zu nicht ausreichend schwitzwasserresistenten (Weißanlaufen durch Wassereinlagerung) Überzügen führen. Thixotropierungsmittel auf Basis von Kieselsäuren liefern Beschichtungsstoffe, welche ebenfalls hinsichtlich dem Verlauf nicht befriedigen.

Wesentliches Merkmal von Thixotropierungsmitteln ist, daß die Viskosität eines damit hergestellten Lackes von der Vorgeschichte des Fließens abhängt und/oder daß die Thixotropierungsmittel strukturviskos sind, i.e., daß die Viskosität des Lackes mit steigender Scherbeanspruchung abnimmt. Ausgehend von einer Grundviskosität nimmt während einer Scherbeanspruchung die Viskosität ab und geht nach Beendigung der Scherbeanspruchung erst allmählich auf den Ausgangswert zurück. Ein thixotropes Gel beispielsweise verflüssigt sich durch Eintrag mechanischer Energie (Rühren oder dergleichen) und verfestigt sich nach Abschluß des Energieeintrags erst allmählich wieder. Strukturviskose bzw. thixotrope Eigenschaften sind für die Lackverarbeitung vorteilhaft. Insbesondere kann die Neigung zur Läuferbildung bei Auftrag eines Lackes mit hoher Naßschichtdicke kontrolliert und reduziert werden. Andererseits dürfen Thixotropierungsmittel die optischen und chemischen Eigenschaften eines damit hergestellten fertigen Überzuges nicht negativ beeinflussen. Thixotropierungsmittel sind in aller Regel partikulär und in einem Beschichtungsstoff, sei es wäßrig oder nichtwäßrig, dispergiert. Im Falle der Harnstoffderivate sind dies nadelförmige, zum Teil helixartig verdrillte Kristalle, wobei vorzugsweise eine Teilchengrößenverteilung zwischen 0,1 µm und 6µm (95-99% der Teilchen, bezogen auf das Volumen) eingerichtet ist und 80% der Kristalle (bezogen auf die Anzahl) kleiner als 2µm sind. Im Falle der Kieselsäuren beträgt die Mahlfeinheit im fertigen Beschichtungsstoff typscherweise weniger als 10µm nach DIN ISO 1524. Die Primärteilchengröße von pyrogenen Kieselsäuren liegt meist im Bereich von 5 bis 20 nm.

Der Erfindung liegt daher das technische Problem zugrunde, einen Beschichtungsstoff anzugeben, welcher eine reduzierte Neigung zur Läuferbildung aufweist und gleichzeitig allen Anforderungen gerecht wird. Insbesondere sollen Verlauf und Lagerbeständigkeit von Beschichtungsstoffen in der Form von Einkomponenten- und Zwei- oder Mehrkomponentensystemen sowie die Schwitzwasserbeständigkeit der hiermit hergestellten Klarschichtlackierungen nachhaltig verbessert werden.

Zur Lösung dieses technischen Problems lehrt die Erfindung, daß der Beschichtungsstoff ein Polyacrylathen als Bindemittel und eine Mischung aus Kieselsäuren und Harnstoff und/oder bestimmten Harnstoffderivaten als Thixotropierungsmittel enthält.

Überraschenderweise führt der Einsatz einer Kombination dieser beiden, an sich bekannten Thixotropierungsmittel zu einem Beschichtungsstoff, welcher sowohl eine reduzierte Neigung zur Läuferbildung aufweist, als auch zu Klarlackierungen, die hinsichtlich Verlauf und Schwitzwasserbeständigkeit vollauf befriedigen: Es lassen sich an vertikalen Substratflächen Trockenfilmdicken von bis zu 50µm und mehr ohne Läuferbildung herstellen. Dies gilt sowohl für Ein- und Mehrkomponentensysteme.

Im Rahmen der vorliegenden Erfindung ist unter einem Einkomponenten(1K)-System ein thermisch härtender Beschichtungsstoff zu verstehen, bei dem das Bindemittel und das Vernetzungsmittel nebeneinander, d.h. in einer Komponente, vorliegen. Voraussetzung hierfür ist, daß die beiden Bestandteile erst bei höheren Temperaturen und/oder bei Bestrahlen mit aktinischer Strahlung miteinander vernetzen.

Der Beschichtungsstoff kann des weiteren ein Zweikomponenten(2K)- oder Mehrkomponenten(3K, 4K)-System sein.

Im Rahmen der vorliegenden Erfindung ist hierunter ein Beschichtungsstoff zu verstehen, bei dem insbesondere das Bindemittel und das Vernetzungsmittel getrennt voneinander in mindestens zwei Komponenten vorliegen, die erst kurz vor der Applikation zusammengegeben werden. Diese Form wird dann gewählt, wenn Bindemittel und Vernetzungsmittel bereits bei Raumtemperatur miteinander reagieren. Beschichtungsstoffe dieser Art werden vor allem zur Beschichtung thermisch empfindlicher Substrate, insbesondere in der Autoreparaturlackierung, angewandt.

Das Harnstoffderivat ist erhältlich ist durch Umsetzung eines Diisocyanates, mit einem primären oder sekundären Amin oder einer Mischung solcher Amine und/oder Wasser, vorzugsweise mit einem aliphatischen, primären Monoamin. Harnstoff bzw. das Harnstoffderivat wird in einer Menge von 0,1 bis 5,0 Gew.-%, vorzugsweise 0,2 bis 2,5 Gew.-%, höchstvorzugsweise 0,6 bis 1,8 Gew.-%, bezogen auf den Gesamtfeststoffgehalt des Beschichtungsstoffs, eingesetzt

Die in den nichtwäßrigen Lacken eingesetzten harnstoffgruppenhaltigen Thixotropierungsmittel werden vorzugsweise durch Umsetzung von Monoaminen oder Mischungen aus Monoaminen mit Polyisocyanaten oder Mischungen aus Polyisocyanaten hergestellt, wobei die Monoamine und die Polyisocyanate in solchen Mengen miteinander umgesetzt werden, daß das Äquivalentverhältnis zwischen Aminogruppen und Isocyanatgruppen zwischen 1,2 und 0,4, vorzugsweise zwischen 1,0 und 0,8 liegt.

Als Monoamine werden vorzugsweise primäre Monoamine, besonders bevorzugt araliphatische oder aliphatische primäre Monoamine, ganz besonders bevorzugt aliphatische primäre Monoamine mit mindestens 6 C-Atomen im Molekül eingesetzt. Als Beispiele für einsetzbare Monoamine werden genannt: Benzylamin, Ethylamin, n-Propylamin, Isopropylamin, n-Butylamin, Isobutylamin, tert. -Butylamin, Pentylamin, n-Hexylamin, n-Oetylamin, iso-Nonanylamin, iso-Tridecylamin, n-Decylamin und Stearylamin. Ebenso sind primäre und sekundäre Amine einsetzbar, welche Ethergruppen enthalten. Es handelt sich um Stoffe der allgemeinen Formel $(CH_3\text{-}(CH_2)_a\text{-}O\text{-}(CH_2)_b)_cNH_d$, wobei a eine ganze Zahl von 0 bis 10, b eine ganze Zahl von 1 bis 20, c 1 oder 2 ist und die Summe aus c und d stets 3 beträgt. Vorzugsweise sind a = 0, b = 3, c = 1 und d = 2.

Als Diisocyanate Können beispielsweise isocyanatgruppenhaltige Reaktionsprodukte aus beispielsweise Polyolen und Polyaminen und Diisocyanaten eingesetzt werden. Vorzugsweise werden aliphatische Diisocyanate, insbesondere Hexamethylendiisocyanat eingesetzt. Als Beispiel für einsetzbarer Diisocyanate werden genannt: Tetramethylen-1,4-diisocyanat, Hexamethylen-1,6-di-isocyanat, omega,omega'-Dipropyl-ätherdiisocyanat, Cyclohexyl-1,4-diisocyanat, Dicyclohexylmethan-4,4'-diisocyanat, 1,5-Dimethyl-2,4-di(isocyanatomethyl)-benzol, 1,5-Di-methyl-2,4-di(isocyanatoethyl)-benzol, 1,3,5-Trimethyl-2,4-di(isocyanatomethyl)-Benzol, 1,3,5-Triethyl-2,4-di(isocyanatomethyl)-benzol, das Trimere des Hexamethylen-1,6-diisocyanats, Isophorondiisocyanat, Dicyclohexyldimethylmethan-4,4'diisocyanat, 2,4-Toluylendiisocyanat, 2,6-Toluylendiisocyanat, Diphenylmethan-4,4'-diisocyanat. Weitere Beispiele geeigneter Diisocyanate sind die nachstehend beschriebenen, als Vernetzungsmittel verwendeten Diisocyanate.

Das harnstoffgruppenhaltige Thixotropierungsmittel kann separat hergestellt werden oder in Gegenwart des eingesetzten Polyacrylatharzes. In letzterem Fall wird üblicherweise so vorgegangen, daß die Aminkomponente zu einer Lösung des Polyacrylatharzes, in einem organischen Lösemittel bzw. in einem Gemisch aus organischen Lösemitteln gegeben wird und dann das Diisocyanat möglichst schnell und unter sehr starkem Rühren zugegeben wird. Die so erhaltene Mischung aus harnstoffgruppenhaltigem Thixotriopierungsmittel und Bindemittel kann dann in den Beschichtungsstoffen eingesetzt werden.

Die Kieselsäure kann eine modifizierte, pyrogene, vorzugsweise hydrophobe, Kieselsäure sein. Hydrophile und hydrophobe Kieselsäuren sind käuflich erwerblich beispielsweise unter dem Handelsnamen Aerosil® und unter den Produktbezeichnungen 200, R972, R974, R805 und R812 von der Firma Degussa AG, Hanau. Die Kieselsäure wird in einer Menge von 0,1 bis 10 Gew.-%, vorzugsweise 0,2 bis 2,5 Gew.-%, höchstvorzugsweise 0,6 bis 2,0 Gew.-%, bezogen auf den Gesamtfeststoffgehalt des Beschichtungsstoffs, eingesetzt.

Als Hauptbindemittel sind solche Bindemittel bezeichnet, die den mengenmäßig größten Anteil an ggf. verwendeten verschiedenen Bindemitteln haben. In Frage kommen ggf. hydroxylgruppenhaltige Polyacrylate. Im Falle von Bindemitteln für wäßrige Lacke enthalten die Bindemittel ionische oder nichtionische Gruppen, welche eine Wasserlöslichkeit oder Wasserdispergierbarkeit gewährleisten.

Im Falle der Polyacrylatharze für nichtwäßrige Beschichtungsstoffe kann das Bindemittel insbesondere ein Polyacrylatharz sein, welches herstellbar ist, indem (a) 16 bis 51 Gew.-%, vorzugsweise 16 bis 28 Gew.-%, eines hydroxylgruppenhaltigen Esters der Acrylsäure oder Methacrylsäure oder eines Gemisches aus solchen Monomeren, (b) 32 bis 84 Gew.-%, vorzugsweise 32 bis 63 Gew.-%, eines von (a) verschiedenen aliphatischen oder cycloaliphatischen Esters der Acrylsäure oder Methacrylsäure mit vorzugsweise mindestens 4 C-Atomen im Alkoholrest oder eines Gemisches aus solchen Monomeren, (c) 0 bis 2 Gew.-%, vorzugsweise 0 bis 1 Gew.-%, einer ethylenisch ungesättigten Carbonsäure oder einer Mischung aus ethylenisch ungesättigten Carbonsäuren und (d) 0 bis 30 Gew.-%, vorzugsweise 0 bis 20 Gew.-%, eines von (a), (b) und (c) verschiedenen ethylenisch ungesättigten Monomers oder eines Gemisches

aus solchen Monomeren zu einem Polyacrylatharz mit einer Säurezahl von 0 bis 15, vorzugsweise 0 bis 8, einer Hydroxylzahl von 80 bis 140, vorzugsweise 80 bis 120, und einem zahlenmittleren Molekulargewicht von 1.500 bis 10.000, vorzugsweise 2.000 bis 5.000 polymerisiert werden, wobei die Summe der Gewichtsanteile der Komponenten (a), (b), (c) und (d) stets 100 Gew.-% ergibt.

Die Herstellung der eingesetzten Polyacrylatharze kann nach allgemein gut bekannten Polymerisationsverfahren in Masse, Lösung oder Emulsion erfolgen. Polymerisationsverfahren zur Herstellung von Polyacrylatharzen sind allgemein bekannt und vielfach beschrieben (vgl. z.B.: Houben Weyl, Methoden der organischen Chemie, 4. Auflage, Band 14/1, Seite 24 bis 255 (1961)).

Weitere Beispiele geeigneter (Co)Polymerisationsverfahren für die Herstellung der Polyacrylatharze werden in den Patentschriften DE-A-197 09 465, DE-C-197 09 476, DE-A-28 48 906, DE-A-195 24 182, EP-A-0 554 783, WO 95/27742, DE-A-38 41 540 oder WO 82/02387 beschrieben.

Vorteilhaft sind Taylorreaktoren, insbesondere für die Copolymerisation in Masse, Lösung oder Emulsion.

Taylorreaktoren, die der Umwandlung von Stoffen unter den Bedingungen der Taylorströmung dienen, sind bekannt. Sie bestehen in wesentlichen aus zwei koaxialen konzentrisch angeordneten Zylindern, von denen der äußere feststehend ist und der innere rotiert. Als Reaktionsraum dient das Volumen, das durch den Spalt der Zylinder gebildet wird. Mit zunehmender Winkelgeschwindigkeit $\omega_i$ des Innenzylinders treten einer Reihe unterschiedlicher Strömungsformen auf, die durch eine dimensionslose Kennzahl, die sogenannte Taylor-Zahl Ta, charakterisiert sind. Die Taylor-Zahl ist zusätzlich zur Winkelgeschwindigkeit des Rührers auch noch abhängig von der kinematischen Viskosität $\nu$ des Fluids im Spalt und von den geometrischen Parametern, dem äußeren Radius des Innenzylinders $r_i$, dem inneren Radius des Außenzylinders $r_a$ und der Spaltbreite d, der Differenz beider Radien, gemäß der folgenden Formel:

$$Ta = \omega_i \, r_i \, d \, \nu^{-1} (d / r_i)^{1/2} \qquad \text{(I)}$$

mit $d = r_a - r_i$.

Bei niedriger Winkelgeschwindigkeit bildet sich die laminare Couette-Strömung, eine einfache Scherströmung, aus. Wird die Rotationsgeschwindigkeit des Innenzylinders weiter erhöht, treten oberhalb eines kritischen Werts abwechselnd entgegengesetzt rotierende (kontrarotierende) Wirbel mit Achsen längs der Umfangsrichtung auf. Diese sogenannten Taylor-Wirbel sind rotationssymmetrisch und haben einen Durchmesser, der annähernd so groß ist wie die Spaltbreite. Zwei benachbarte Wirbel bilden ein Wirbelpaar oder eine Wirbelzelle.

Dieses Verhalten beruht darauf, daß bei der Rotation des Innenzylinders mit ruhendem Außenzylinder die Fluidpartikel nahe des Innenzylinders einer stärkeren Zentrifugalkraft ausgesetzt sind als diejenigen, die weiter vom inneren Zylinder entfernt sind. Dieser Unterschied der wirkenden Zentrifugalkräfte drängt die Fluidpartikel vom Innen- zum Außenzylinder. Der Zentrifugalkraft wirkt die Viskositätskraft entgegen, da bei der Bewegung der Fluidpartikel die Reibung überwunden werden muß. Nimmt die Rotationsgeschwindigkeit zu, dann nimmt auch die Zentrifugalkraft zu. Die Taylor-Wirbel entstehen, wenn die Zentrifugalkraft größer als die stabilisierende Viskositätskraft wird.

Bei der Taylor-Strömung mit einem geringen axialen Strom wandert jedes Wirbelpaar durch den Spalt, wobei nur ein geringer Stoffaustausch zwischen benachbarten Wirbelpaaren auftritt. Die Vermischung innerhalb solcher Wirbelpaare ist sehr hoch, wogegen die axiale Vermischung über die Paargrenzen hinaus nur sehr gering ist. Ein Wirbelpaar kann daher als gut durchmischter Rührkessel betrachtet werden. Das Strömungssystem verhält sich somit wie ein ideales Strömungsrohr, indem die Wirbelpaare mit konstanter Verweilzeit wie ideale Rührkessel durch den Spalt wandern.

Erfindungsgemäß von Vorteil sind hierbei Taylorreaktoren mit einer äußeren Reaktorwand und- einem hierin befindlichen konzentrisch oder exzentrisch angeordneten Rotor, einem Reaktorboden und einem Reaktordeckel, welche zusammen das ringspaltförmige Reaktorvolumen definieren, mindestens einer Vorrichtung zur Zudosierung von Edukten sowie einer Vorrichtung für den Produktablauf, wobei die Reaktorwand und/oder der Rotor geometrisch derart gestaltet ist oder sind, daß auf im wesentlichen der gesamten Reaktorlänge im Reaktorvolumen die Bedingungen für die Taylorströmung erfüllt sind, d.h., daß sich der Ringspalt in Durehflußrichtung verbreitert.

Die eingesetzten Polyacrylatharze werden vorzugsweise mit Hilfe des Lösungspolymerisationsverfahrens hergestellt. Hierbei wird üblicherweise ein organisches Lösemittel bzw. Lösemittelgemisch vorgelegt und zum Sieden erhitzt. In dieses organische Lösemittel bzw. Lösemittelgemisch werden dann das zu polymerisierende Monomerengemisch sowie ein oder mehrere Polymerisationsinitiatoren kontinuierlich zugegeben. Die Polymerisation erfolgt bei Temperaturen zwischen 100 und 160°C, vorzugsweise zwischen 130 und 150°C. Als Polymerisationsinitiatoren werden vorzugsweise freie Radikale bildende Initiatoren eingesetzt. Initiatorkraft und -menge werden üblicherweise so gewählt, daß bei der Polymerisationstemperatur während der Zulaufphase ein möglichst konstantes Radikalangebot vorliegt.

Als Beispiele für einsetzbare Initiatoren werden genannt: Dialkylperoxide, wie Di-tert.-Butylperoxid oder Dicumyl-peroxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethyl- hexanoat oder tert.-Butylper-2-ethylhexanoat; Azodinitrile wie Azobisisobutyronitril oder C-C-spaltende Initiatoren wie Benzpinakolsilylether.

Die Polymerisationsbedingungen (Reaktionstemperatur, Zulaufzeit der Monomerenmischung, Menge und Art der organischen Lösemittel und Polymerisationsinitiatoren, eventuelle Mitverwendung von Molekulargewichtsreglern, wie z.B. Mercaptanen, Thiolglykolsäureestern und Chlorwasserstoffen) werden so ausgewählt, daß die eingesetzten Polyacrylatharze ein zahlenmittleres Molekulargewicht von 1.500 bis 10.000, vorzugsweise 2.000 bis 5.000 (bestimmt durch Gelpermeationschromatographie unter Verwendung von Polystyrol als Eichsubstanz) aufweisen.

Die Säurezahl der erfindungsgemäß eingesetzten Polyacrylatharze kann vom Fachmann durch Einsatz entsprechender Mengen der Komponente (c) eingestellt werden. Analoges gilt für die Einstellung der Hydroxylzahl. Sie ist über die Menge an eingesetzter Komponente (a) steuerbar.

Als Komponente (a) kann im Prinzip jeder hydroxylgruppenhaltige Ester der Acrylsäure oder Methacrylsäure oder ein Gemisch aus solchen Monomeren eingesetzt werden. Als Beispiele werden genannt: Hydroxyalkylester der Acrylsäure, wie z.B. Hydroxyethylacrylat, Hydroxypropyl- acrylat, Hydroxybutylacrylat, insbesondere 4-Hydroxy- butylacrylat; Hydroxyalkylester der Methacrylsäure, wie z.B. Hydroxyethylmethacrylat, Hydroxypropylmethacrylat, Hydroxybutylmethacrylat, insbesondere 4-Hydroxybutyl- methacrylat; Umsetzungsprodukte aus cyclischen Estern, wie z.B. E-Caprolacton und Hydroxyalkylestern der Acrylsäure bzw. Methacrylsäure.

Die Zusammensetzung der Komponente (a) wird vorzugsweise so ausgewählt, daß bei alleiniger Polymerisation der Komponente (a) ein Polyaciylatharz mit einer Glasüber- gangstemperatur von -50 bis +70, vorzugsweise -30 bis +50°C erhalten wird. Die Glasübergangstemperatur kann vom Fachmann unter Zuhilfenahme der Formel

$$1/T_G = \sum_{n=1}^{n=x} W_n/T_{Gn}$$

$T_G$ = Glasübergangstemperatur des Polymeren
x = Anzahl der verschiedenen einpolymerisierten Monomere,
$W_n$ = Gewichtsanteil des n-ten Monomers
$T_{Gn}$ = Glasübergangstemperatur des Homopolymers aus dem n-ten Monomer

näherungsweise berechnet werden.

Als Komponente (b) kann im Prinzip jeder von (a) verschiedene aliphatische oder cycloaliphatische Ester der Acrylsäure oder Methacrylsäure mit mindestens 4 C-Atomen im Alkoholrest oder ein Gemisch aus solchen Monomeren eingesetzt werden. Als Beispiele werden genannt: aliphatische Ester der Acryl- und Methacrylsäure mit 4 bis 20 C-Atomen im Alkoholrest, wie z.B. n-Butyl-, iso-Butyl-, tert.-Butyl, 2-Ethylhexyl-, Stearyl- und Laurylacrylat und -methacrylat sowie cycloaliphatische Ester der Acryl- und Methacrylsäure wie z. B. Cyclohexylacrylat und Cyclohexylmethacrylat. Die Zusammensetzung der Komponente (b) wird vorzugsweise so ausgewählt, daß bei alleiniger Polymerisation der Komponente (b) ein Polyacrylatharz mit einer Glasübergangstemperatur von 10 bis 100, vorzugsweise 20 bis 60°C erhalten wird.

Als Komponente (c) kann im Prinzip jede ethylenisch ungesättigte Carbonsäure oder eine Mischung aus ethylenisch ungesättigten Carbonsäuren eingesetzt werden. Als Komponente (c) werden vorzugsweise Acrylsäure und/oder Methacrylsäure eingesetzt.

Als Komponente (d) kann im Prinzip jedes von (a), (b) und (c) verschiedene ethylenisch ungesättigte Monomer oder ein Gemisch aus solchen Monomeren eingesetzt werden. Als Beispiele für Monomere, die als Komponente (d) eingesetzt werden können, werden genannt: vinylaromatische Kohlenwasserstoffe, wie Styrol, alpha-Alkylstyrol und Vinyltoluol, Amide der Acrylsäure und Methacrylsäure, wie z.B. Methacrylamid und Acrylamid, Nitrile der Methacrylsäure und Acrylsäure; Vinylether und Vinylester oder Polysiloxanmakromonomere, wie sie in den Patentschriften DE-A-38 07571, DE-A 37 06 095, EP-B-0 358 153, US-A 4,754,014, DE-A 44 21 823 oder WO 92/22615 beschrieben werden. Als Komponente (d) werden vorzugsweise vinylaromatische Kohlenwasserstoffe, insbesondere Styrol eingesetzt. Die Zusammensetzung der Komponente (d) wird vorzugsweise so ausgewählt, daß bei alleiniger Polymerisation der Komponente (d) ein Harz mit einer Glasübergangstemperatur von 70 bis 120, vorzugsweise 80 bis 100°C erhalten wird.

Vorteilhafterweise sind die Bindemittel in dem Beschichtungsstoff in einer Menge von 10 bis 90 Gew.-%, besonders bevorzugt 15 bis 80 Gew.-% und insbesondere 20 bis 70 Gew.-%, jeweils bezogen auf den Gesamtfeststoffgehalt des Beschichtungsstoffs, enthalten.

Der Beschichtungsstoff enthält des weiteren mindestens ein Vernetzungsmittel.

Handelt es sich bei dem Beschichtungsstoff um ein Mehrkomponentensystem, werden Polyisocyanate und/ oder Polyepoxide, insbesondere aber Polyisocyanate als Vernetzungsmittel verwendet.

Weitere Beispiele geeigneter Polyisocyanate sind organische Polyisocyanate, insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 10.000, vorzugsweise 100 bis 5000 und insbesondere 100 bis 2000 mPas (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel die Polyisocyanate sind beispielsweise Ethoxyethylpropionat, Amylmethylketon oder Butylacetat. Außerdem können die Polyisocyanate in üblicher und bekannter Weise hydrophil oder hydrophob modifiziert sein.

Beispiele für geeignete Polyisocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben. Beispielsweise geeignet sind auch die isocyanatgruppenhaltigen Polyurethanpräpolymere, die durch Reaktion von Polyolen mit einem Überschuß an Polyisocyanaten hergestellt werden können und die bevorzugt niederviskos sind.

Weitere Beispiele geeigneter Polyisocyanate sind Isocyanurat-, Biuret-, Allophanat-, Iminooxadiazindon-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis(isocyanatomethyl)cyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethylheptan oder 1-Isocyanato-2-(3-isocyanatopropyl)cyclohexan oder Mischungen aus diesen Polyisocyanaten eingesetzt.

Weiterer Beispiele geeigneter Polyisocyanate sind die vorstehend bei der Herstellung der Thixotropierungsmittel beschriebenen.

Beispiele für geeignete Polyepoxide sind alle bekannten aliphatischen und/oder cycloaliphatischen und/oder aromatischen Polyepoxide, beispielsweise auf Basis Bisphenol-A oder Bisphenol-F. Als Polyepoxide geeignet sind beispielsweise auch die im Handel unter den Bezeichnungen Epikote® der Firma Shell, Denacol ® der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol EX-512 (Polyglycerolpolyglycidylether) und Denacol EX-521 (Polyglycerolpolyglycidylether).

Im Falle der Einkomponentensysteme werden Vernetzungsmittel verwendet, welche bei höheren Temperaturen mit den funktionellen Gruppen der Bindemittel reagieren, um ein dreidimensionales Netzwerk aufzubauen. Selbstverständlich können solche Vernetzungsmittel in untergeordneten Mengen in den Mehrkomponentensystemen mit verwendet werden. Im Rahmen der vorliegenden Erfindung bedeutet "untergeordnete Menge" einen Anteil, welcher die hauptsächliche Vernetzungsreaktion nicht stört oder gar ganz verhindert.

Beispiele geeigneter Vernetzungsmittel dieser Art sind blockierte Polyisocyanate. Beispiele geeigneter Polyisocyanate sind die vorstehend beschriebenen.

Beispiele für geeignete Blockierungsmittel sind die aus der US-Patentschrift US-A-4,444,954 bekannten Blokkierungsmittel wie

i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;

ii) Lactame, wie ε-Caprolactam, δ-Valerolactam, γ-Butyrolactam oder β-Propiolactam;

iii) aktive methylenische Verbindungen, wie Diethylmalonat, Dimethylmalonat, Acetessigsäureethyl- oder -methylester oder Acetylaceton;

iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonopropylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;

v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;

vi) Säureamide wie Acetoanilid, Acetoanisidinamid, Acrylamid, Methacrylamid, Essigsäureamid, Stearinsäureamid oder Benzamid;

vii) Imide wie Succinimid, Phthalimid oder Maleimid;

viii) Amine wie Diphenylamin, Phenylnaphthylamin, Xylidin, N-Phenylxylidin, Carbazol, Anilin, Naphthylamin, Butylamin, Dibutylamin oder Butylphenylamin;

ix) Imidazole wie Imidazol oder 2-Ethylimidazol;

x) Harnstoffe wie Harnstoff, Thioharnstoff, Ethylenharnstoff, Ethylenthioharnstoff oder 1,3-Diphenylharnstoff;

xi) Carbamate wie N-Phenylcarbamidsäurephenylester oder 2-Oxazolidon;

xii) Imine wie Ethylenimin;

xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;

xiv) Salze der schwefeligen Säure wie Natriumbisulfit oder Kaliumbisulfit;

xv) Hydroxamsäureester wie Benzylmethacrylohydroxamat (BMH) oder Allylmethacrylohydroxamat; oder

xvi) substituierte Pyrazole, Imidazole oder Triazole; sowie

Gemische dieser Blockierungsmittel, insbesondere Dimethylpyrazol und Triazole, Malonester und Acetessigsäureester oder Dimethylpyrazol und Succinimid.

Als Vernetzungsmittel können auch Tris(alkoxycarbonylamino)triazine der allgemeinen Formel

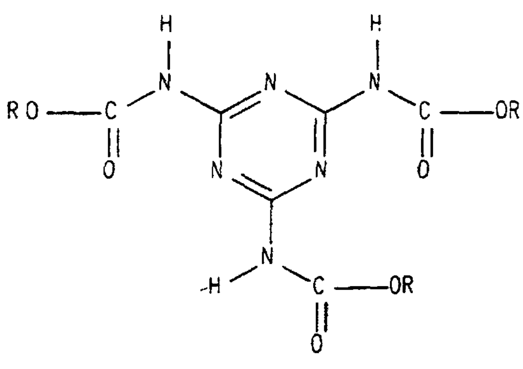

eingesetzt werden.

Beispiele geeigneter Tris(alkoxycarbonylamino)triazine werden in den Patentschriften US-A-4,939,213, US-A-5,084,541 oder der EP-A-0 624 577 beschrieben. Insbesondere werden die Tris(methoxy-, Tris(butoxy- und/ oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Insbesondere sind Aminoplastharze, beispielsweise Melaminharze, als Vernetzungsmittel verwendbar. Hierbei kann jedes für transparente Decklacke oder Klarlacke geeignete Aminoplastharz oder eine Mischung aus solchen Aminoplastharzen verwendet werden. Insbesondere kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Weitere Beispiele geeigneter Vernetzungsmittel sind beta-Hydroxyalkylamide wie N,N,N',N'-Tetrakis(2-hydroxyethyl)adipamid oder N,N,N',N'-Tetrakis(2-hydroxypropyl)-adipamid.

Weitere Beispiele geeigneter Vernetzungsmittel sind Siloxane, insbesondere Siloxane mit mindestens einer Trialkoxy- oder Dialkoxysilangruppe.

Weitere Beispiele geeigneter Vernetzungsmittel sind Polyanhydride, insbsondere Polysuccinsäureanhydrid.

Die Menge der Vernetzungsmittel in dem Beschichtungsstoff kann breit variieren und richtet sich insbesondere zum einen nach der Funktionalität der Vernetzungsmittel und zum anderen nach der Anzahl der im Bindemittel vorhandenen vernetzenden funktionellen Gruppen sowie nach der Vernetzungsdichte, die man erzielen will. Der Fachmann kann daher die Menge der Vernetzungsmittel aufgrund seines allgemeinen Fachwissens, gegebenenfalls unter Zuhilfenahme einfacher orientierender Versuche ermitteln. Vorteilhafterweise ist das Vernetzungsmittel in dem Beschichtungsstoff in einer Menge von fünf bis 60 Gew.-%, besonders bevorzugt 10 bis 50 Gew.-% und insbesondere 15 bis 45 Gew.-%, jeweils bezogen auf den Gesamtfeststoffgehalt des Beschichtungsstoffs, enthalten. Hierbei empfiehlt es sich des weiteren, die Mengen an Vernetzungsmittel und Bindemittel so zu wählen, daß in dem Beschichtungsstoff das Verhältnis von funktionellen Gruppen im Vernetzungsmittel und funktionellen Gruppen im Bindemittel zwischen 2 : 1 bis 1 : 2, vorzugsweise 1,5 : 1 bis 1 : 1,5, besonders bevorzugt 1,2 : 1 bis 1 : 1,2 und insbesondere 1,1 : 1 bis 1 : 1,1 liegt.

Bevorzugt ist es, daß der Beschichtungsstoff ein nichtwäßriger Beschichtungsstoff, vorzugsweise ein nichtwäßriger, transparenter Glanzklarlack, ist. Der Ausdruck Glanzklarlack meint, daß ein möglichst hoher Glanz angestrebt ist, im Gegensatz zu den Mattlacken.

Im Falle von nichtwäßrigen Beschichtungsstoffen enthalten diese 20 bis 70 Gew.-%, vorzugsweise 40 bis 60 Gew.-%, (bezogen auf den applikationsfertige Beschichtungsstoff) organische Lösungsmittel, wie z.B. aliphatische, aromatische und/oder cycloaliphatische Kohlenwasserstoffe, Alkylester der Essigsäure oder Propionsäure, Alkanole, Ketone, Glykolether und/oder Glykoletherester.

Darüber hinaus kann der Beschichtungsstoff mindestens ein übliches und bekanntes Lackadditiv in wirksamen Mengen, d.h. in Mengen vorzugsweise bis zu 40 Gew.-%, besonders bevorzugt bis zu 30 Gew.-% und insbesondere bis zu 20 Gew.-%, jeweils bezogen auf den Gesamtfeststoffgehalt des Beschichtungsstoffs, enthalten. Wesentlich ist, daß die Lackadditive die Transparenz und Klarheit des Beschichtungsstoffs nicht negativ beeinflussen.

Die Lackadditive werden ausgewählt aus :

- UV-Absorber;
- Lichtschutzmittel wie HALS-Verbindungen, Benztriazole oder Oxalanilide;
- Radikalfänger;
- Katalysatoren für die Vernetzung wie Dibutylzinndilaurat oder Lithiumdecanoat;
- Slipadditive;
- Polymerisationsinhibitoren;
- Entschäumer;
- Emulgatoren, insbesondere nicht ionische Emulgatoren wie alkoxylierte Alkanole, Polyole, Phenole und Alkylphenole oder anionische Emulgatoren wie Alkalisalze oder Ammoniumsalze von Alkancarbonsäuren, Alkansulfonsäuren und Sulfosäuren von alkoxylierten Alkanolen, Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;

- Verlaufmittel;
- filmbildende Hilfsmittel wie Cellulose-Derivate;
- transparente Füllstoffe wie Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- Rheologiesteuernder Additive wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;
- Flammschutzmittel und/oder
- Mattierungsmittel.

Weitere Beispiele geeigneter Lackadditive (a6) werden in dem Lehrbuch »Lackadditive« von Johan Bieleman, Wiley-VCH, Weinheim, New York, 1998, beschrieben.

Die Erfindung betrifft weiterhin ein Verfahren zur Herstellung eines erfindungsgemäßen Beschichtungsstoffs, wobei:

A) ein Bindemittel hergestellt wird,

B) die Herstellung des Harnstoffderivats in Gegenwart zumindest einer Teilmenge des Bindemittels aus Stufe A) durchgeführt wird und

C) die Mischung aus Bindemittel und Harnstoffderivat mit

- einer Anreibung (Paste) der Kieselsäure mit einer ersten Teilmenge eines optional vom Bindemittel aus Stufe A) verschiedenen Bindemittels, vorzugsweise eines Polyacrylatharzes der vorstehend beschriebenen Art,
- mit einem Vernetzungsmittel oder einer Mischung aus Vernetzungsmitteln und, optional,
- mit mindestens einem der vorstehend beschriebenen Lackadditive,
- mit mit Polyacrylaten verträglichen, von den vorstehend angegebenen Bindemitteln verschiedenen Bindemitteln und
- ggf. mit der Restmenge der mit dem Bindemittel angeriebenen Kieselsäure

gemischt und auf eine zur Verarbeitung üblichen Viskosität eingestellt wird.

Hierbei kann das Vernetzungsmittel oder die Mischung von Vernetzungsmitteln gleichzeitig oder erst unmittelbar vor einer Applikation des Beschichtungsstoffs zugegeben werden. Im Falle von Zweikomponentensystemen wird das Vernetzungsmittel, beispielsweise unblockierte Polyisocyanate, erst unmittelbar vor der Applikation des Beschichtungsstoffs zugegeben. Im Falle von Einkomponentensystemen kann das Vernetzungsmittel, beispielsweise blockierte Polyisocyanate, bereits herstellerseitig zugegeben sein.

Die Erfindung betrifft weiterhin die Verwendung eines erfindungsgemäßen Beschichtungsstoffs zur Herstellung einer Glanzklarlackierung über einer farbund/oder effektgebenden Basislackierung, insbesondere einer Basislackierung, welche unter Verwendung eines Wasserbasislacks hergestellt worden ist. Farbgebung wird mittels Farbstoffen und oder Farbpigmenten erreicht. Effektgebung wird mit Effektpigmenten wie Metalleffektpigmenten oder Micapigmenten erreicht.

Beispiele geeigneter Wasserbasislacke sowie die entsprechenden Lackierungen sind aus den Patentschriften EP-A-0 089 497, EP-A-0 256 540, EP-A-0 260 447, EP-A-0 297 576, WO 96/12747, EP-A-0 523 610, EP-A-0 228 003,

EP-A-0 397 806, EP-A-0 574 417, EP-A-0 531 510, EP-A-0 581 211, EP-A-0 708 788, EP-A-0 593 454, DE-A-43 28 092, EP-A-0 299 148, EP-A-0 394 737, EP-A-0 590 484, EP-A-0 234 362, EP-A-0 234 361, EP-A-0 543 817, WO 95/14721, EP-A-0 521 928, EP-A-0 522 420, EP-A-0 522 419, EP-A-0 649 865, EP-A-0 536 712, EP-A-0 596 460, EP-A-0 596 461, EP-A-0 584 818, EP-A- 0 669 356, EP-A-0 634 431, EP-A-0 678 536, EP-A-0 354 261, EP-A-0 424 705, WO 97/49745, WO 97/49747, EP-A-0 401 565, EP-B-0 730 613 oder WO 95/14721 bekannt.

Die Erfindung betrifft schließlich ein Verfahren zur Herstellung einer farbund/oder effektgebenden Mehrschichtlackierung auf einer Oberfläche von grundierten oder ungrundierten Substraten, bei dem (1) ein mit farb- und/oder effektgebenden Pigmenten versehener Basislack, insbesondere Wasserbasislack, auf die Substratoberfläche aufgebracht wird, (2) die in Stufe (1) aufgebrachte Basislackschicht bei Temperaturen zwischen 15°C und 100°C, vorzugsweise zwischen 20°C und 85°C, getrocknet wird, (3) auf die in Stufe (2) getrockneten Basislackschicht ein transparenter erfindungsgemäßer Beschichtungsstoff als Klarlackschicht aufgebracht wird und anschließend (4) Basislackschicht und Klarlackschicht zusammen eingebrannt werden und zwar vorzugsweise bei Temperaturen zwischen 120°C und 180°C und in einer Zeitspanne von 5 min. bis 60 min.

Als Substrate kommen alle zu lackierenden Oberflächen von Gegenständen in Betracht, die einer Härtung der hierauf befmdlichen Lackschichten unter Anwendung von Hitze zugänglich sind, das sind z. B. Gegenstände aus Metallen, Kunststoffen, Holz, Keramik, Stein, Textil, Faserverbunden, Leder, Glas, Glasfasern, Glas- und Steinwolle oder mineral- und harzgebundene Baustoffen, wie Gips- und Zementplatten oder Dachziegel. Demnach ist der Beschichtungsstoff, insbesondere als Klarlack, für Anwendungen in der Automobillackierung der Lackierung von Möbeln und der industriellen Lackierung, inklusive Coil Coating und Container Coating, in hohem Maße geeignet. Im Rahmen der industriellen Lackierungen eignet er sich für die Lackierung praktisch aller Teile für den privaten oder industriellen Gebrauch wie Radiatoren, Haushaltsgeräte, Kleinteile aus Metall, Radkappen oder Felgen.

Mit dem Beschichtungsstoff, insbesondere dem Klarlack, können insbesondere auch grundierte oder nicht grundierte sowie gegebenenfalls mit einer Basislackschicht beschichte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Es kann auch für die Beschichtung von üblicherweise im Fahrzeugbau, insbesondere Kraftfahrzeugbau, eingesetzten Kunststoffe zum Einsatz kommen. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen werden.

Bei den mit Hilfe des Beschichtungsstoffs, insbesondere des Klarlacks, hergestellten Mehrschichtlackierungen ist keine Delamination wegen mangelhafter Zwischenschichthaftung zu beobachten. Ihr Verlauf und ihre optischen Eigenschaften sind hervorragend. Auch neigen sie nicht mehr zum Weißanlaufen nach Schwitzwasserbelastung.

## Herstellbeispiele

### 1. Die Herstellung eines erfindungsgemäß verwendbaren Polyacrylats (A)

In einem Laborreaktor mit einem Nutzvolumen von 4 1 ausgestattet mit einem Rührer, zwei Tropftrichtern für die Monomermischung resp. Initiatorlösung, Stickstoffeinleitungsrohr, Thermometer und Rückflußkühler wurden 897 g einer Fraktion aromatischer Kohlenwasserstoffe mit einem Siedebereich von 158 - 172°C eingewogen. Das Lösemittel wurde auf 140 °C aufgeheizt. Nach Erreichen von 140 °C wurden eine Monomermischung aus 487 g t-Butylacrylat, 215 g n-Butylmethacrylat, 143 g Styrol, 572 g Hydroxipropylmethacrylat und 14 g Acrylsäure innerhalb von 4 Stunden, und eine Initiatorlösung von 86g t-Butylperethylhexanoat in 86 g des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden auf 140 °C gehalten und danach abgekühlt. Die resultierende mit einer Mischung aus 1-Methoxipropylacetat-2, Butylglykolacetat und Butylacetat verdünnte Polymerlösung hatte einen Feststoffgehalt von 53%, bestimmt in einem Umluftofen 1 h bei 130 °C, eine Säurezahl von 10 und eine Viskosität von 23 dPas (gemessen an einer 60%igen Anlösung der Polymerlösung in dem beschriebenen aromatischen Lösemittel, unter Verwendung eines ICI Platte-Kegel Viskosimeters bei 23 °C).

### 2. Die Herstellung eines erfindungsgemäß verwendbaren Polyacrylats (B)

In einem Laborreaktor mit einem Nutzvolumen von 4 1 ausgestattet mit einem Rührer, zwei Tropftrichtern für die Monomermischung resp. Initiatorlösung, Stickstoffeinleitungsrohr, Thermometer und Rückflußkühler wurden 720 g einer Fraktion aromatischer Kohlenwasserstoffe mit einem Siedebereich von 158 - 172 °C eingewogen. Das Lösemittel wurde auf 140 °C aufgeheizt. Nach Erreichen von 140 °C wurden eine Monomermischung aus 537 g 2-Ethyl-hexylmethacrylat, 180 g n-Butylmethacrylat, 210 g Styrol, 543 g Hydroxiethylacrylat und 30 g Acrylsäure innerhalb von 4 Stunden, und eine Initiatorlösung von 150 g t-Butylperethylhexanoat in 90 g des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wird die Reaktionsmischung zwei weitere Stunden auf 140 °C gehalten und danach abgekühlt. Die resultierende Polymerlösung hatte einen Feststoffgehalt von 65%, bestimmt in einem Umluftofen 1 h bei 130 °C, eine Säurezahl von 17 und eine Viskosität von 16 dPas (gemessen an einer 60%igen Anlösung der Polymerlösung in dem beschriebenen aromatischen Lösemittel, unter Verwendung eines ICI Platte-Kegel Viskosimeters bei 23 °C).

**3. Die Herstellung eines erfindungsgemäß verwendbaren Polyacrylats (C)**

In einem Laborreaktor mit einem Nutzvolumen von 4 1 ausgestattet mit einem Rührer, zwei Tropftrichtern für die Monomermischung resp. Initiatorlösung, Stickstoffeinleitungsrohr, Thermometer und Rückflußkühler wurden 720 g einer Fraktion aromatischer Kohlenwasserstoffe mit einem Siedebereich von 158 - 172 °C eingewogen. Das Lösemittel wurde auf 140 °C aufgeheizt. Nach Erreichen von 140 °C wurden eine Monomermischung aus 450 g 2-Ethylhexylmethacrylat, 180 g n-Butylmethacrylat, 210 g Styrol, 180 g Hydroxiethylacrylat, 450 g 4-Hydroxibutylacrylat und 30 g Acrylsäure innerhalb von 4 Stunden, und eine Initiatorlösung von 150 g t-Butylperethylhexanoat in 90 g des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden auf 140 °C gehalten und danach abgekühlt. Die resultierende Polymerlösung hatte einen Feststoffgehalt von 65%, bestimmt in einem Umluftofen 1 h bei 130 °C, eine Säurezahl von 15 und eine Viskosität von 3 dPas (gemessen an einer 60%igen Anlösung der Polymerlösung in dem beschriebenen aromatischen Lösemittel, unter Verwendung eines ICI Platte-Kegel Viskosimeters bei 23 °C).

**4. Die Herstellung eines erfindungsgemäß verwendbaren blockierten Polyisocyanats (A)**

In einem 41 - Edelstahlreaktor wurden 40 Gewichtsteile Basonat® HI 190 B/S (Isocyanurat auf der Basis von Hexamethylendiisocyanat der Firma BASF Aktiengesellschaft) und 16,4 Gewichtsteile Solventnaphtha eingewogen und auf 50°C erhitzt. Innerhalb von vier Stunden wurden 26,27 Gewichtsteile Diethylmalonat, 6,5 Gewichtsteile Acetessigsäureethylester und 0,3 Gewichtsteile Katalysatorlösung (Natriumethylhexanoat) gleichmäßig zudosiert. Im Anschluß daran wurde die Temperatur auf 70°C erhöht. Bei Erreichen eines Isocyanat-Äquivalentgewichts von 5.900 bis 6.800 wurden 1,03 Gewichtsteile 1,4-Cyclohexyldimethanol während 30 Minuten bei 70°C unter Rühren zugegeben. Nach Erreichen eines Isocyanat-Äquivalentgewichts von ≥ 13.000 wurden 5 Gewichtsteile n-Butanol zugegeben. Die Temperatur wurde dabei auf 50°C gesenkt, und das resultierende blockierte Polyisocyanat mit n-Butanol auf einen theoretischen Festkörpergehalt von 68 Gew.-% angelöst.

**5. Die Herstellung eines erfindungsgemäß verwendbaren blockierten Polyisocyanats (B)**

In einem 41 - Edelstahlreaktor wurden 41,76 Gewichtsteile Vestanat® 1890 (Isocyanurat auf der Basis von Isophorondiisocyanat der Firma Creanova) und 20,76 Gewichtsteile Solventnaphtha eingewogen und auf 50°C erhitzt. Innerhalb von vier Stunden wurden 23,49 Gewichtsteile Diethylmalonat, 5,81 Gewichtsteile Acetessigsäureethylester und 0,14 Gewichtsteile Katalysatorlösung (Natriumethylhexanoat) gleichmäßig zudosiert. Nach Beendigung des Zulaufs wurden nochmals 0,14 Gewichtsteile Katalysatorlösung hinzugegeben. Im Anschluß daran wurde die Temperatur auf 80°C erhöht. Bei Erreichen eines Isocyanat-Äquivalentgewichts von 5900 bis 6800 wurden 0,9 Gewichtsteile 1,4-Cyclohexyldimethanol während 30 Minuten bei 80°C unter Rühren zugegeben. Nach Erreichen eines Isocyanat-Äquivalentgewichts von ≥ 13.000 wurden 5 Gewichtsteile n-Butanol zugegeben. Die Temperatur wurde dabei auf 50°C gesenkt, und das resultierende blockierte Polyisocyanat mit n-Butanol auf einen theoretischen Festkörpergehalt von 63 Gew.-% angelöst.

**6. Die Herstellung einer erfindungsgemäß verwendbaren Thixotropierpaste (A)**

In einer Laborrührwerksmühle der Firma Vollrath wurden 800 g Mahlgut, bestehend aus 592 g des Polyacrylats A, 80 g Butylacetat, 64 g Xylol und 64 g Aerosil® 972 (Degussa AG, Hanau), zusammen mit 1100 g Quarzsand (Korngröße 0.7 - 1 mm) eingewogen und unter Wasserkühlung 30 Minuten angerieben.

**7. Die Herstellung einer erfindungsgemäß verwendbaren Thixotropierpaste (B)**

In einer Laborrührwerksmühle der Firma Vollrath werden 800 g Mahlgut, bestehend aus 323.2 g des Polyacrylats C, 187.2 g Butanol, 200.8 g Xylol und 88.8 g Aerosil® 812 (Degussa AG, Hanau), zusammen mit 1100 g Quarzsand (Korngröße 0.7 - 1 mm) eingewogen und unter Wasserkühlung 30 Minuten angerieben.

**8. Die Herstellung eines erfindungsgemißen 2K-Klarlacks (Beispiel 1) und nicht erfindungsgemäßen 2K-Klarlacks (Vergleichsversuch 1)**

Ein erfindungsgemäßer 2K-Klarlack (Beispiel 1) und ein herkömmlicher 2K-Klarlack (Vergleichsversuch 1) wurden aus den in der Tabelle 1 aufgeführten Bestandteilen durch Vermischen hergestellt und auf Prüftafeln appliziert. Als Prüftafeln wurden Stahltafeln aus Karosseriestahl verwendet, welche mit handelsüblicher Zinkphosphatlösung vorbehandelt und wie nachstehend beschrieben mit einem Elektrotauchlack und einem Füller beschichtet worden waren.

Tabelle 1:

| **Zusammensetzung des erfindungsgemäßen 2K-Klarlacks (Beispiel 1) u. des herkömmlichen 2K- Klarlacks (Vergleichsversuch 1)** | | |
|---|---|---|
| **Bestandteile Stammlack** | **Beispiel 1 (Gew.-Teile)** | **Vergleichsvers.1 (Gew.-Teile)** |
| Bindemittel | | |
| Polyacrylat A | 61.9 | 65.4 |
| Setalux® C91756 (Akzo Nobel Resins, Bergen op Zoom) | 13.5 | 13.5 |
| Thixotropierpaste A | 5.0 | - |
| Weitere Bestandteile | | |
| Substituiertes Hydroxyphenyltriazin (65 %ig in Xylol) | 1.5 | 1.5 |
| N-Methyl-2,2,6,6-tetramethylpiperydinylester | 1.0 | 1.0 |
| Byk® 306 (Byk Chemie) | 0.2 | 0.2 |
| Byk® 310 (Byk Chemie) | 0.15 | 0.15 |
| Byk® ES 80 (Byk Chemie) | 0.2 | 0.2 |
| Butanol | 1.5 | 1.5 |
| Xylol | 2.45 | 2.7 |
| Ethoxypropylacetat | 2.0 | 2.0 |
| Butylglykolacetat | 5.6 | 6.85 |
| Glykolsäurebutylester | 5.0 | 5.0 |
| | 100 | 100 |
| Vernetzer | 33 | 33 |

Der Vernetzer ist eine Anlösung eines Polyisocyanats auf der Basis Hexamethylendiisocyanat (80%-ige Anlsg. von Desmodur® N 3390von Bayer AG in Butylacetat/Solventn.)

Setalux® C91756 ist ein Harnstoffderivat in einem Bindemittel gelöst bzw. dispergiert.

**9. Lacktechnische Prüfungen**

Zur Herstellung der Prüftafeln wurden nacheinander ein Elektrotauchlack mit einer Schichtdicke von 18 - 22 µm und ein Wasserfüller mit einer Schichtdicke von 35 - 40 µm appliziert und eingebrannt. Hierbei wurde der Elektrotauchlack während 20 Minuten bei 170°C eingebrannt und der Füller während 20 Minuten bei 160°C eingebrannt. Anschließend wurde ein blauer Wasserbasislack mit einer Schichtdicke von 12 - 15 µm aufgetragen und 10 Minuten bei 80°C abgelüftet. Abschließend wurde das zu prüfende 2K-System des Beispiels 1 und des Vergleichsversuches 1 mit einer Schichtdicke von 40 - 45µm in einem Einmalauftrag elektrostatisch vertikal appliziert (Glockentyp: Ecobell), wonach der Basislack und das 2K-System während 20 Minuten bei 140°C vertikal gehärtet wurden (naß-in-naß-Verfahren).

Tabelle 2:

| Verlaufseigenschaften (vertikal) des erfindungsgemäßen 2K- Klarlacks des Beispiels 1 und des herkömmlichen 2K-Klarlacks des Vergleichsversuchs 1 | | |
|---|---|---|
| | **Beispiel 1** | **Vergleichsvers. 1** |
| Verlauf (visuell) | glatte Oberfl. (ausgeprägte Narbe) | welligere Oberfl. (flache Narbe) |
| Verlauf (meßtechn.) Wavescan/ longwave (40µm)[a)] | 5.0 | 9.0 |

a) Meßgerät: Fa. Byk/Gardner - Wave scan plus

**10. Die Herstellung eines erfindungsgemäßen 1K-Klarlacks (Beispiel 2) und eines nicht erfindungsgemäßen 1K-Klarlacks (Vergleichsversuch 2)**

Ein erfindungsgemäßer 1K-Klarlack (Beispiel 2) und ein herkömmlicher 1K-Klarlack (Vergleichsversuch 2) wurden aus den in der Tabelle 3 aufgeführten Bestandteilen durch Vermischen hergestellt und auf Prüftafeln (vgl. Herstellbeispiel 9) appliziert.

Tabelle 3:

| Zusammensetzung des erfindungsgemäßen 1K-Klarlacks (Beispiel 2) und des herkömmlichen 1K-Klarlacks (Vergleichsversuch 2) | | |
|---|---|---|
| **Bestandteile** | **Beispiel 2 (Gew. -Teile)** | **Vergleichsvers. 2 (Gew. -Teile)** |
| Bindemittel | | |
| Polyacrylat B | 36.8 | 38.7 |
| Setalux® C91756 (Akzo Nobel Resins, Bergen op Zoom) | 13.1 | 13.1 |
| Thixotropierpaste B | 4.8 | - |
| Vernetzungsmittel | | |
| Polyisocyanat A | 7.5 | 7.5 |
| Polyisocyanat B | 16.4 | 16.4 |
| Handelsübliches Butanol-verethertes Melamin-Formaldehyd-Harz (60%-ig in Butanol/Xylol) | 12.1 | 12.1 |
| Weitere Bestandteile | | |
| Substit. Hydroxyphenyl-benztriazol (95%-ig in Xylol) | 1.0 | 1.0 |
| Aminoethermodifizierter -2,2,6,6-Tetramethyl-piperydinylester | 0.8 | 0.8 |
| Byk® 390 (Byk Chemie) | 0.3 | 0.3 |
| Byk® 310 (Byk Chemie) (5%-ig in Xylol) | 0.7 | 0.7 |
| Benzin 180/210 | 1.6 | 1.6 |
| Solvesso® 150 | 3.0 | 3.7 |
| Isotridecylalkohol | 1.5 | 1.5 |
| Xylol | 0.4 | 1.6 |
| | 100 | 100 |

**11. Lacktechnische Prüfungen**

Zur Herstellung der Prüftafeln wurden nacheinander ein Elektrotauchlack mit einer Schichtdicke von 18 - 22 µm und ein Wasserfuller mit einer Schichtdicke von 35 - 40 µm appliziert und eingebrannt. Hierbei wurde der Elektrotauchlack während 20 Minuten bei 170°C eingebrannt und der Füller während 20 Minuten bei 160°C eingebrannt. Anschließend wurde ein grüner Wasserbasislack mit einer Schichtdicke von 12 - 15 µm aufgetragen und 10 Minuten

bei 80°C abgelüftet. Abschließend wurde das zu prüfende 1K-System des Beispiels 2 und des Vergleichsversuches 2 mit einer Schichtdicke von 40 - 45µm appliziert, wonach der Basislack und das 1K-System während 20 Minuten bei 140°C gehärtet wurden (naß-in-naß-Verfahren).

Tabelle 4:

| **Kondenswasser-Konstantklimatest (KK-Test)[a] des erfindungsgemäßen 1K-Klarlacks des Beispiels 2 und des herkömmlichen 1K-Klarlacks des Vergleichsversuchs 2** | | |
|---|---|---|
| | **Beispiel 2** | **Vergleichsvers.2** |
| Schwitzwasserbeurteilung | kein Weißanlaufen durch Wassereinlagerung | starkes Weißanlaufen durch Wassereinlagerung |

a) übliches Verfahren zur Bewertung der Beständigkeit von Lackmaterialien gegenüber einer Belastung mit Dauerfeuchte (240 Stunden, 100% rel. Feuchte, 40°C, Details in der von der BASF Coatings AG erhältlichen Prüfvorschrift MKK0001A, Ausgabe A/14.05.1996). Die Auswertung erfolgt eine Stunde nach Abschluß der Schwitzwasserbelastung.

Die Ergebnisse der Beispiele 1 und 2 untermauern einerseits die Überlegenheit im vertikalen Verlauf, andererseits in der Schwitzwasserresistenz gegenüber den herkömmlichen Systemen.

## Patentansprüche

1. Beschichtungsstoff enthaltend als Bindemittel ein Polyacrylatharz und ein Vemetzungsmittel sowie mindestens ein Thixotropierungsmittel **dadurch gekennzeichnet, daß** der Beschichtungsstoff eine Mischung aus Kieselsäuren und Harnstoff und/oder Hamstoffderivaten enthält, wobei das Hamstoffderivat erhältlich ist durch Umsetzung eines Diisocyanats mit einem primären oder sekundären Amin oder einer Mischung solcher Amine und/oder Wasser, vorzugsweise mit einem aliphatischen, primären Monoamin.

2. Beschichtungsstoff nach Anspruch 1, **dadurch gekennzeichnet, daß** die Kieselsäure eine modifizierte, pyrogene, vorzugsweise hydrophobe, Kieselsäure ist.

3. Beschichtungsstoff nach einem der Ansprüche 1 oder 2, **dadurch gekennzeichnet, daß** das Bindemittel ein Polyacrylatharz ist, welches herstellbar ist, indem

   (a) 16 bis 51 Gew.-%, vorzugsweise 16 bis 28 Gew.-%, eines hydroxylgruppenhaltigen Esters der Acrylsäure oder Methacrylsäure oder eines Gemisches aus solchen Monomeren,
   (b) 32 bis 84 Gew.-%, vorzugsweise 32 bis 63 Gew.-%, eines von (a) verschiedenen aliphatischen oder cycloaliphatischen Esters der Acrylsäure oder Methacrylsäure mit vorzugsweise mindestens 4 C-Atomen im Alkoholrest oder eines Gemisches aus solchen Monomeren,
   (c) 0 bis 2 Gew.-%, vorzugsweise 0 bis 1 Gew.-%, einer ethylenisch ungesättigten Carbonsäure oder einer Mischung aus ethylenisch ungesättigten Carbonsäuren und
   (d) 0 bis 30 Gew.-%, vorzugsweise 0 bis 20 Gew.-%, eines von (a), (b) und (c) verschiedenen ethylenisch ungesättigten Monomers oder eines Gemisches aus solchen Monomeren

   zu einem Polyacrylatharz mit einer Säurezahl von 0 bis 15, vorzugsweise 0 bis 8, einer Hydroxylzahl von 80 bis 140, vorzugsweise 80 bis 120, und einem zahlenmittleren Molekulargewicht von 1.500 bis 10.000, vorzugsweise 2.000 bis 5.000 polymerisiert werden, wobei die Summe der Gewichtsanteile der Komponenten (a), (b), (c) und (d) stets 100 Gew.-% ergibt.

4. Beschichtungsstoff nach einem der Ansprüche 1 bis 3, **dadurch gekennzeichnet, daß** als Vernetzungsmittel mindestens ein Polyisocyanat, Polyepoxid, blockiertes Polyisocyanat, Tris(alkoxycarbonylamino)triazin, Aminoplastharz, beta-Hydroxyalkylamid, Siloxan und/oder Polyanhydrid verwendet wird oder werden.

5. Beschichtungsstoff nach einem der Ansprüche 1 bis 4, **dadurch gekennzeichnet, daß** er ein nichtwäßriger Beschichtungsstoff, vorzugsweise ein nichtwäßriger, transparenter Glanzklarlack, ist.

6. Verfahren zur Herstellung eines Beschichtungsstoffs gemäß einem der Ansprüche 1 bis 5, wobei

   A) ein Bindemittel hergestellt wird,

B) die Herstellung des Harnstoffderivats in Gegenwart zumindest einer Teilmenge des Bindemittels aus Stufe A) durchgeführt wird und
C) die Mischung aus Bindemittel und Harnstoffderivat mit

- einer Anreibung (Paste) der Kieselsäure mit einer ersten Teilmenge eines optional vom Bindemittel aus Stufe A) verschiedenen Bindemittels, vorzugsweise eines Polyacrylatharzes der vorstehend beschriebenen Art,

- mit einem Vernetzungsmittel oder einer Mischung aus Vernetzungsmitteln und, optional,

- mit mindestens einem der Lackadditive: UV-Absorber, Lichtschutzmittel, Radikalfänger, Katalysatoren, Slipadditive, Polymerisationsinhibitoren; Entschäumer, Emulgatoren, Netzmittel, Haftvermittler, Verlaufmittel, filmbildende Hilfsmittel wie Cellulose-Derivate, transparente Füllstoffe, rheologiesteuernde Additive, Flammschutzmittel und/oder Mattierungsmittel;

- mit mit Polyacrylaten verträglichen, von den vorstehend angegebenen Bindemitteln verschiedenen Bindemitteln und

- ggf. mit der Restmenge der mit dem Bindemittel angeriebenen Kieselsäure

gemischt und auf eine zur Verarbeitung üblichen Viskosität eingestellt wird, wobei das Vernetzungsmittel oder die Mischung von Vemetzungsmitteln gleichzeitig oder erst unmittelbar vor einer Applikation des Beschichtungsstoffs zugegeben werden kann.

**7.** Verwendung eines Beschichtungsstoffs nach einem der Ansprüche 1 bis 5 zur Herstellung eines Glanzklarlackierung über einem farbund/oder effektgebenden Basislacklackierung.

**8.** Verfahren zur Herstellung einer farb- und/oder effektgebenden Mehrschichtlackierung auf einer Substratoberfläche nach dem Naßin-naß-Verfahren, bei dem

(1) ein mit farb- und/oder effektgebenden Pigmenten versehener Basislack auf die Substratoberfläche aufgebracht wird,
(2) die in Stufe (1) aufgebrachte Basislackschicht bei Temperaturen zwischen 15°C und 100°C, vorzugsweise zwischen 20°C und 85°C, getrocknet wird,
(3) auf die in Stufe (2) getrocknete Basislackschicht ein transparenter Beschichtungsstoff nach einem der Ansprüche 1 bis 5 als Klarlackschicht aufgebracht wird und anschließend
(4) Basislackschicht und Klarlackschicht zusammen eingebrannt werden.

## Claims

**1.** A coating material comprising a polyacrylate resin as binder and a crosslinking agent and also at least one thixotropic agent, **characterized in that** the coating material comprises a mixture of silicas and urea and/or urea derivatives, where the urea derivative is obtainable by reaction of a diisocyanate with a primary or secondary amine or a mixture of such amines and/or water, preferably with an aliphatic, primary monoamine.

**2.** The coating material as claimed in claim 1, **characterized in that** the silica is a modified, pyrogenic, preferably hydrophobic, silica.

**3.** The coating material as claimed in either of claims 1 and 2, **characterized in that** the binder is a polyacrylate resin which is preparable by polymerizing

(a) from 16 to 51% by weight, preferably from 16 to 28% by weight, of a hydroxyl-containing ester of acrylic acid or methacrylic acid or a mixture of such monomers,
(b) from 32 to 84% by weight, preferably from 32 to 63% by weight, of a non-(a) aliphatic or cycloaliphatic ester of acrylic acid or methacrylic acid having preferably at least 4 carbon atoms in the alcohol residue or a mixture of such monomers,
(c) from 0 to 2% by weight, preferably from 0 to 1% by weight, of an ethylenically unsaturated carboxylic acid

or a mixture of ethylenically unsaturated carboxylic acids, and
(d) from 0 to 30% by weight, preferably from 0 to 20% by weight, of a non-(a), -(b) and -(c) ethylenically unsaturated monomer or a mixture of such monomers

to give a polyacrylate resin having an acid number of from 0 to 15, preferably from 0 to 8, a hydroxyl number of from 80 to 140, preferably from 80 to 120, and a number-average molecular weight of from 1500 to 10 000, preferably from 2000 to 5000, the sum of the weight fractions of components (a), (b), (c) and (d) always being 100% by weight.

4. The coating material as claimed in any of claims 1 to 3, **characterized in that** the crosslinking agent(s) used comprise(s) at least one polyisocyanate, polyepoxide, blocked polyisocyanate, tris(alkoxycarbonylamino)triazine, amino resin, beta-hydroxyalkylamide, siloxane and/or polyanhydride.

5. The coating material as claimed in any of claims 1 to 4, **characterized in that** it is a nonaqueous coating material, preferably a nonaqueous, transparent gloss clearcoat material.

6. A process for preparing a coating material as claimed in any of claims 1 to 5, wherein

A) a binder is prepared,

B) the urea derivative is prepared in the presence of at least a portion of the binder from stage A), and

C) the mixture of binder and urea derivative is mixed with

- a paste of the silica containing a first portion of a binder which is optionally different than the binder from stage A), preferably a polyacrylate resin of the type described above,
- with a crosslinking agent or a mixture of crosslinking agents and, optionally,
- with at least one of the following coatings additives: UV absorbers, light stabilizers, free-radical scavengers, catalysts, slip additives, polymerization inhibitors; defoamers, emulsifiers, wetting agents, adhesion promoters, leveling agents, film forming auxiliaries such as cellulose derivatives, transparent fillers, rheology control additives, flame retardants and/or flatting agents,
- with polyacrylate-compatible binders different than the binders indicated above, and
- if desired, with the remaining portion of the silica pasted with the binder

and adjusted to a customary processing viscosity, it being possible to add the crosslinking agent or the mixture of crosslinking agents simultaneously or not until immediately before an application of the coating material.

7. The use of a coating material as claimed in any of claims 1 to 5 for producing a gloss clearcoat finish over a color and/or effect basecoat finish.

8. A process for producing a multicoat color and/or effect paint system on a substrate surface by the wet-on-wet technique, which comprises

(1) applying a basecoat material provided with color and/or effect pigments to the substrate surface,
(2) drying the basecoat film applied in stage (1) at temperatures between 15°C and 100°C, preferably between 20°C and 85°C,
(3) applying to the basecoat film dried in stage (2) a transparent coating material as claimed in any of claims 1 to 5, as a clearcoat film, and subsequently
(4) baking basecoat film and topcoat film together.

## Revendications

1. Matière de revêtement contenant en tant que liant une résine polyacrylate et un agent de réticulation ainsi qu'au

moins un agent de thixotropie, **caractérisée en ce que** la matière de revêtement contient un mélange d'acides siliciques et d'urée et/ou de dérivés d'urée, le dérivé d'urée pouvant être obtenu par réaction d'un diisocyanate avec une amine primaire ou secondaire ou un mélange de telles amines et/ou d'eau, de préférence avec une monoamine primaire aliphatique.

**2.** Matière de revêtement selon la revendication 1, **caractérisée en ce que** l'acide silicique est un acide silicique pyrogéné, modifié, de préférence hydrophobe.

**3.** Matière de revêtement selon la revendication 1 ou 2, **caractérisée en ce que** le liant est une résine polyacrylate qui peut être préparée par polymérisation de

(a) 16 à 51 % en poids, de préférence 16 à 28 % en poids, d'un ester contenant des groupes hydroxy de l'acide acrylique ou de l'acide méthacrylique ou d'un mélange de tels monomères,
(b) 32 à 84 % en poids, de préférence 32 à 63 % en poids, d'un ester aliphatique ou cycloaliphatique de l'acide acrylique ou de l'acide méthacrylique, différent de (a), comportant de préférence au moins 4 atomes de carbone dans le reste alcool, ou d'un mélange de tels monomères,
(c) 0 à 2 % en poids, de préférence 0 à 1 % en poids, d'un acide carboxylique à insaturation éthylénique ou d'un mélange d'acides carboxyliques à insaturation éthylénique et
(d) 0 à 30 % en poids, de préférence 0 à 20 % en poids, d'un monomère à insaturation éthylénique, différent de (a), (b) et (c) ou d'un mélange de tels monomères,

en une résine polyacrylate ayant un indice d'acide de 0 à 15, de préférence de 0 à 8, un indice de groupes hydroxy de 80 à 140, de préférence de 80 à 120, et une masse moléculaire moyenne en nombre de 1 500 à 10 000, de préférence de 2 000 à 5 000, la somme des parties en poids des composants (a), (b), (c) et (d) donnant toujours 100 % en poids.

**4.** Matière de revêtement selon l'une quelconque des revendications 1 à 3, **caractérisée en ce qu'**on utilise comme agent de réticulation au moins un polyisocyanate, un polyépoxyde, un polyisocyanate bloqué, une tris (alcoxycarbonylamino) triazine, un aminoplaste, un β-hydroxyalkylamide, un siloxane et/ou un polyanhydride.

**5.** Matière de revêtement selon l'une quelconque des revendications 1 à 4, **caractérisée en ce qu'**il s'agit d'une matière de revêtement non aqueuse, de préférence d'un vernis brillant transparent non aqueux.

**6.** Procédé pour la préparation d'une matière de revêtement selon l'une quelconque des revendications 1 à 5, dans lequel

A) on prépare un liant,
B) on effectue la préparation du dérivé d'urée en présence d'au moins une quantité partielle du liant provenant de l'étape A) et
C) on mélange le mélange de liant et dérivé d'urée avec

- une pâte de l'acide silicique avec une première quantité partielle d'un liant éventuel, différent du liant de l'étape A), de préférence d'une résine polyacrylate du type décrit précédemment,
- avec un agent de réticulation ou un mélange d'agents de réticulation et, éventuellement,
- avec au moins l'un des additifs pour peintures : absorbeurs UV, photoprotecteurs, capteurs de radicaux, catalyseurs, lubrifiants, inhibiteurs de polymérisation, antimousses, émulsifiants, agents mouillants, promoteurs d'adhérence, agents d'étalement, adjuvants filmogènes tels que des dérivés de cellulose, charges transparentes, additifs- de rhéologie, agents ignifuges et/ou agents de matité ;
- avec des liants compatibles avec des polyacrylates, différents des liants indiqués précédemment, et
- éventuellement avec la quantité résiduelle de l'acide silicique mis sous forme de pâte avec le liant,

et on ajuste le mélange à une viscosité usuelle pour la mise en oeuvre, l'agent de réticulation ou le mélange d'agents de réticulation pouvant être ajouté simultanément ou seulement immédiatement avant une application de la matière de revêtement.

7. Utilisation d'une matière de revêtement selon l'une quelconque des revendications 1 à 5, pour la production d'un revêtement de vernis brillant sur un revêtement de peinture de base colorée et/ou à effet.

8. Procédé pour la production d'un revêtement de peinture multicouche colorée et/ou à effet sur la surface d'un subjectile, selon le procédé humide-sur-humide, dans lequel

(1) on applique sur la surface du subjectile une peinture de base munie de pigments colorés et/ou à effet,
(2) la couche de peinture de base appliquée dans l'étape (1) est séchée à des températures comprises entre 15°C et 100°C, de préférence entre 20°C et 85°C,
(3) on applique sur la couche de peinture de base séchée dans l'étape (2) une matière de revêtement transparente selon l'une quelconque de revendications 1 à 5, en tant que couche de vernis, et ensuite
(4) couche de peinture de base et couche de peinture de finition sont séchées au four ensemble.